# EUROPÄISCHE PATENTANMELDUNG

(11) **EP 2 169 349 A2**
(43) Veröffentlichungstag der Anmeldung: **31.03.2010**
(21) Anmeldenummer: 09012369.6
(22) Anmeldetag: 30.09.2009
(51) Int. Cl.: G01C 15/10

(54) **Optischer block zur Abtastung mit einem Laserstrahl**

(30) Priorität: 30.09.2008 RU 2008138860
(71) Anmelder: Gulunov, Alexey V., Chelyabinsk 454138 (RU)
(72) Erfinder: Gulunov, Alexey V., Chelyabinsk 454138 (RU)
(74) Vertreter: Jeck, Anton

(57) **Zusammenfassung**

Die Erfindung betrifft einen optischen Block zur Abtastung mit einem Laserstrahl, der eine Quelle (1) zur Laserausstrahlung und ein optisches Element zur Abtastung aufweist. Das optische Element weist zur Abtastung einen Teiler (2) des eingehenden Laserstrahls in mindestens zwei Punktstrahlen und Prismen (3) zur Zerlegung der Punktstrahlen in eine Linie auf, wobei die Prismen auf den Ausgang jedes der Punktstrahlen gerichtet sind.

## Beschreibung

Die Erfindung betrifft einen optischen Block zur Abtastung mit einem Laserstrahl, der eine Quelle zur Laserausstrahlung und ein optisches Element zur Abtastung aufweist.

Die Erfindung kann zur Beeinflussung der Richtung eines Lichtstrahls, besonders eines Laserstrahls, verwendet werden, wenn dazu Mittel für die Veränderung der Richtung einer Laserausstrahlung vorgesehen sind. In geodätischen Geräten, insbesondere in solchen wie lasergesteuerten Nivellierinstrumente, kann für diese Aufgabe die Stütz-Laserebene verwendet werden.

Es sind geodätische Geräte bekannt, bei denen eine kreisförmige Abtastung des Laserstrahls realisiert ist (Nivellierinstrumente PLS 360 der Firma Pacific Laser Systems - siehe Web-Seite www.plslaser.ru und Black & Decker LZR4 Web-Seite www.megafool.ru).

Bei diesen bekannten Geräten mit einer kreisförmigen linearen Abtastung des Laserstrahls wird ein optischer Block verwendet. Das System weist ein zylindrisches Prisma mit einer Abtastung von 60° bis 150° auf. Zur Abtastung von 360° werden mehrere solcher Systeme benötigt.

Der Mangel des Stands der Technik ist die Anwendung einiger teurer Laserstrahlen, ein kompliziertes mechanisches System, ein großer Umfang und schließlich ein hoher Wert des Geräts.

Dem technischen Wesen, sowohl nach dem errechneten Effekt als auch nach den verwendeten Anlagen, kommt ein optischer Block zur Abtastung mit einem Laserstrahl, wie er im Patent CH 674 573 beschrieben ist, am nächsten. Auf dieser Grundlage hat die Schweizerische Firma Leica ein universelles Laser-Lesegerät herausgebracht. Der daraus bekannte optische Block zur Abtastung eines Laserstrahls enthält eine Quelle zur Laserausstrahlung und ein optisches Element zur Abtastung, das als Sechseckprisma einer auf den Ausgang ausgerichteten Optik ausgelegt ist. Zwischen dem Objektiv und dem Objekt und dem Prismaelement ist ein Knoten zur Regulierung der Lichtebene im Raum angeordnet. Das System weist zwei Keile mit der Möglichkeit ihrer gegenseitigen Wirkung auf, die verhältnismäßig zueinander auf verschiedenen Seiten liegen. Eine derartige Lösung der Ausgestaltung des optischen Blocks führt zu einem konstruktiv komplizierten Gerät, wie eine Untersuchung zur Erhöhung der Selbstkosten eines Geräts auf dieser Grundlage gezeigt hat.

Es ist Aufgabe der Erfindung, einen optischen Block zur Abtastung mit einem Laserstrahl, der von einer Quelle einer Laserausstrahlung ausgeht, zu schaffen, mit der eine Abtastung in 360° (mit einer kreisförmigen, linearen Abtastung) möglich ist und dabei einfach im Aufbau ist und zuverlässig arbeitet.

Die gestellte Aufgabe wird durch die Merkmale des Anspruchs 1 gelöst.

Das optische Element zur Abtastung mit einem Laserstrahl besteht dabei aus einem Teiler, der den eingehenden Laserstahl in mindestens zwei Punktstrahlen aufteilt, und Prismen zur Zerlegung der Punktstrahlen in eine Linie. Die Prismen sind dabei auf den Ausgang der Punktstrahlen gerichtet.

Der Teiler kann dabei als ein Satz von lichtprojizierenden Spiegeln ausgebildet sein. Er kann auch in Form eines Prismas mit zwei Spiegelrändern ausgebildet sein, wobei er zusätzlich noch mit einer zentralen Öffnung versehen sein kann.

Der Teiler des eingehenden Laserstrahls kann auch als Viereckelement eines Reflexionsprismas ausgebildet sein.

Das Prisma zur Zerlegung des Punktstrahls in eine Linie kann als zylindrische Linse ausgebildet sein oder den Kegel mit der Außenoberfläche eines Spiegels darstellen.

Der optische Block zur Abtastung eines Laserstrahls ist aus dem Stand der Technik nicht ableitbar und erfüllt das Kriterium der Neuheit, er erfüllt auch das Kriterium der industriellen Anwendbarkeit, da zu seiner Realisierung auf bekannte Materialien und Zulieferteile von beliebigen Unternehmen zurück gegriffen werden kann.

Der optische Block erfüllt auch die gestellten Aufgaben, insbesondere der Abtastung in 360°, d. h. mit einer kreisförmigen, linearen Abtastung bei einfachem Aufbau und zuverlässiger Arbeit des Blocks.

Die Ausgestaltung des optischen Elements ermöglicht es, den aus dem Teiler abgegebenen Laserstrahl in mindestens zwei Punktstrahlen aufzuteilen. Über die Prismen können die Punktstrahlen anschließend in Linien umgewandelt werden. Die nachfolgende Vereinigung in die Ebenen dieser Linien gewährleistet eine kreisförmige lineare Abtastung der von einer Punktquelle ausgehenden Laserausstrahlung.

Ist der Teiler als Satz projizierender Spiegel ausgebildet, dann verringert dies die Forderungen an die Genauigkeit bei der Herstellung der Details und ermöglicht zudem eine Handregulierung.

Die Ausführung des Teilers des eingehenden Laserstrahls als Viereck Reflexionsprismas dehnt die Varianten der Ausgabe der Blöcke zur Abtastung aus, vereinfacht die Abstimmung des Blocks und erhöht die Zuverlässigkeit seiner Arbeit.

Die Nutzung des Prismas zur Zerlegung des Punktstrahls in eine Linie, ermöglicht als zylindrische Linse konstruktiv einen einfachen und sicheren Knoten zu erfüllen. Damit wird die Zuverlässigkeit des optischen Blocks insgesamt erhöht, sowie die Selbstkosten des ganzen optischen Blocks verringert.

Die Erfindung wird anhand von in den Zeichnungen dargestellten Ausführungsbeispielen näher erläutert. Es zeigen:
- Fig. 1: einen optischen Block zur Abtastung mit einem Laserstrahl, wobei der eingehende Laserstrahl in zwei Punktstrahlen aufgeteilt ist und
- Fig. 2: einen optischen Block zur Abtastung mit einem Laserstrahl, wobei der eingehende Laserstrahl in drei Punktstrahlen aufgeteilt ist.

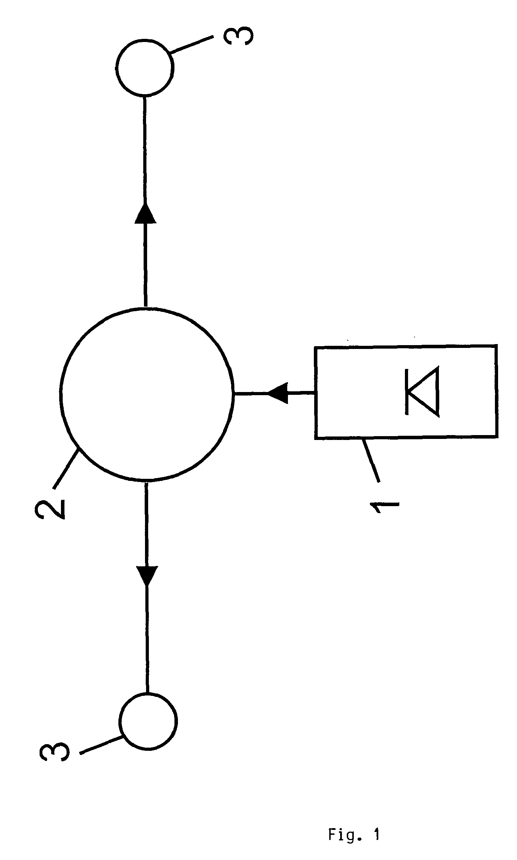

Wie Fig. 1 zeigt, enthält der optische Block eine Quelle 1 zur Laserausstrahlung. Der Teiler 2 teilt den eingehenden Laserstrahl in zwei Punktstrahlen auf. Die Prismen 3 zerlegen die Punktstrahlen in eine Linie.

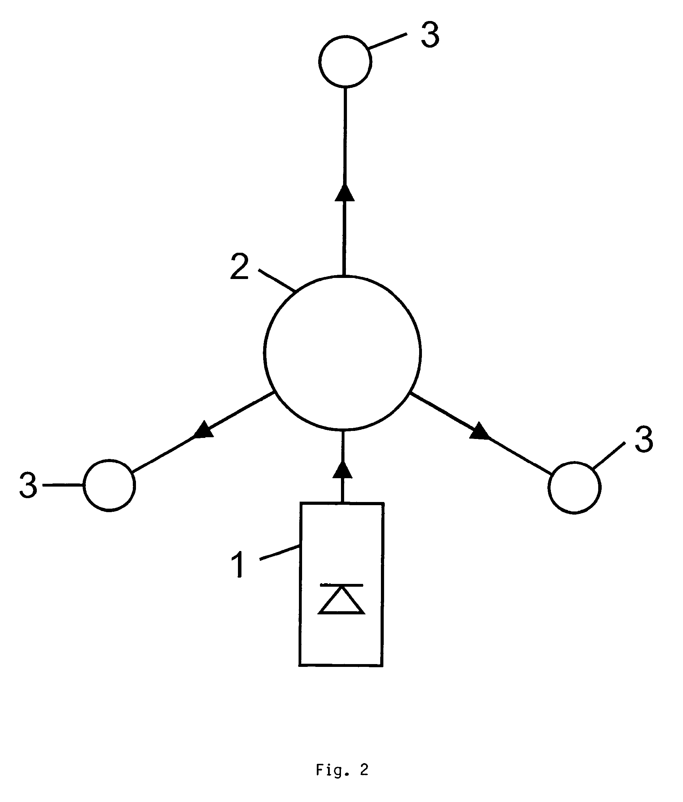

Der optische Block nach Fig. 2 enthält eine Quelle 1 zur Laserausstrahlung. Der Teiler 2 teilt den eingehenden Laserstrahl in drei Punktstrahlen auf. Die drei Prismen 3 übernehmen die Zerlegung der Punktstrahlen in eine Linie.

Der optische Block zur Abtastung eines Laserstrahls kann als getrennte Einrichtung ausgeführt sein. Am Ausgang des Teilers 2 treten die Punktstrahlen als Punktausstrahlungen auf, die die Prismen 3 in Linien umwandeln. Die Vereinigung in den Ebenen dieser Linien mittels Regulierungsschrauben ermöglicht es, eine kreisförmige lineare Abtastung des Strahls von einer Punkt-Quelle des Laserstrahls zu bekommen.

Mit dem optischen Block zur Abtastung mit einem Laserstrahl kann man laserprojiziert ein Nivellierinstrument mit einem Kompensator ausstatten, bei dem die Linie der Gegenzeichnung die horizontale oder senkrechte Lage automatisch nach der vorläufigen Anlage der Achse des Drehens in die Lage nach dem kreisförmigen Niveau einnimmt.

Bei der Verwendung von zwei Blöcken zur Abtastung mit einem Laserstrahl, die senkrecht zueinander eingerichtet sind, kann man ein Nivellierinstrument bekommen, das eine kreisförmige lineare Abtastung in zwei orthogonalen Ebenen abgibt.

Bei der Verwendung von drei Blöcken zur Abtastung mit einem Laserstrahl, die senkrecht zueinander eingerichtet sind, kann man ein Nivellierinstrument bekommen, das eine kreisförmige lineare Abtastung in drei orthogonalen Ebenen abgibt.

Der optische Block zur Abtastung eines Laserstrahls kann wie folgt ausgeführt sein:

### Beispiel 1

Als der Teiler 2 der eingehenden Laserstrahlen wird ein in Form eines Prismas mit zwei von den Spiegelrändern und der zentralen Öffnung aufgestelltes optisches Ele ment verwendet. Das Prisma 3 zur Zerlegung des Punktstrahls in eine Linie stellen drei zylindrische Linsen dar. Der Laserstrahl, der auf das Prisma mit zwei von den Spiegelrändern und der zentralen Öffnung trifft, teilt sich in drei Punktstrahlen auf, die auf die zylindrischen Linsen geraten. Dabei werden sie in Linien umgewandelt und von der nachfolgenden Vereinigung der Ebene dieser Linien mit Hilfe der Regelungsschrauben bekommt man eine kreisförmige Abtastung mit einem Strahl der von einer Quelle eines Laserstrahls.

### Beispiel 2

Der Teiler 2 dient als Reflexionsprisma für die Teilung und die gerade Reflexion des eingehenden Strahls. Als Prisma 3 für die Zerlegung der drei Punktstrahlen in Linien dienen drei zylindrische Linsen.

Das Reflexionsprisma, das unmittelbar auf die Achsen des Laserstrahls ausgerichtet ist, teilt den eingehenden Laserstrahl in drei Punktstrahlen auf. Die Punktstrahlen treffen auf die zylindrischen Linsen auf, wo sie in Linien umgewandelt werden. Dann vereinen sich die Linien in den Ebenen und bilden eine kreisförmige Abtastung mit dem Strahl, der von einer Punkt-Quelle des Laserstrahls ausgeht.

## Patentansprüche

1. Optischer Block zur Abtastung mit einem Laserstrahl, der eine Quelle (1) zur Laserausstrahlung und ein optisches Element zur Abtastung aufweist,
**dadurch gekennzeichnet,**
**dass** das optische Element zur Abtastung einen Teiler (2) des eingehenden Laserstrahls in mindestens zwei Punktstrahlen und Prismen (3) zur Zerlegung der Punktstrahlen in eine Linie aufweist, wobei die Prismen (3) auf den Ausgang jedes der Punktstrahlen gerichtet sind.

2. Optischer Block nach Anspruch 1,
**dadurch gekennzeichnet,**
**dass** der Teiler (2) des eingehenden Laserstrahls als ein Satz von lichterprojizierenden Spiegeln ausgebildet ist.

3. Optischer Block nach Anspruch 1,
**dadurch gekennzeichnet,**
**dass** der Teiler (2) des eingehenden Laserstrahls als ein optisches Element in der Form eines Prismas (3) mit zwei Spiegelrändern ausgebildet ist.

4. Optischer Block nach Anspruch 1,
**dadurch gekennzeichnet,**
**dass** der Teiler (2) des eingehenden Lichtstrahls als ein optisches Element in der Form eines Prismas (3) mit zwei Spiegelrändern und einer zentralen Öffnung ausgebildet ist.

5. Optischer Block nach Anspruch 1,
**dadurch gekennzeichnet,**
**dass** der Teiler (2) des eingehenden Lichtstrahls als ein Viereckelement eines Reflexionsprismas ausgebildet ist.

6. Optischer Block nach Anspruch 1,
**dadurch gekennzeichnet,**
**dass** das Prisma (3) zur Zerlegung eines der Punktstrahlen ein eine Linie als zylindrische Linse ausgebildet ist.

7. Optischer Block nach Anspruch 1,
**dadurch gekennzeichnet,**
**dass** das Prisma (3) zur Zerlegung des Punktstrahls in eine Linie als ein Kegel mit der Außenoberfläche eines Spiegels ausgebildet ist.
